Europäisches Patentamt

European Patent Office

Office européen des brevets

(18)

(11) Publication number: **0 050 814**
**B1**

(12)

# EUROPEAN PATENT SPECIFICATION

(45) Date of publication of patent specification: **06.03.85**

(51) Int. Cl.⁴: **H 02 K 1/06, H 02 K 23/04**

(21) Application number: **81108453.2**

(22) Date of filing: **17.10.81**

(54) DC motor with ferrite permanent magnet field poles.

(30) Priority: **24.10.80 JP 148149/80**

(43) Date of publication of application:
**05.05.82 Bulletin 82/18**

(45) Publication of the grant of the patent:
**06.03.85 Bulletin 85/10**

(84) Designated Contracting States:
**BE CH DE FR GB IT LI NL SE**

(56) References cited:
**US-A-3 277 324**

**ELEKTROTECHNIK UND MASCHINENBAU Vol. 93, No. 2, 1976, Wien H.P. KREUTH "Entmagnetisierungsschutz durch Polbleche bei permanentmagneterregten Gleichstromkleinmotoren", page 64 to 66**

(73) Proprietor: **FANUC LTD**
**5-1, Asahigaoka 3-chome Hino-shi Tokyo 191 (JP)**

(72) Inventor: **Amemiya, Yoichi**
**1019-357, Nishiterakatamachi Hachioji-shi Tokyo (JP)**
Inventor: **Sogabe, Masatoyo**
**Fujitsu Fanuc Hino-shataku 201-go 3-27, Tamadaira**
**Hino-shi Tokyo (JP)**

(74) Representative: **Blumbach Weser Bergen Kramer Zwirner Hoffmann Patentanwälte Radeckestrasse 43 D-8000 München 60 (DE)**

Courier Press, Leamington Spa, England.

## Description

Technical Field

The present invention relates to a DC motor, and more particularly to a DC motor with magnetic field poles made of ferrite permanent magnets.

Background of the Invention

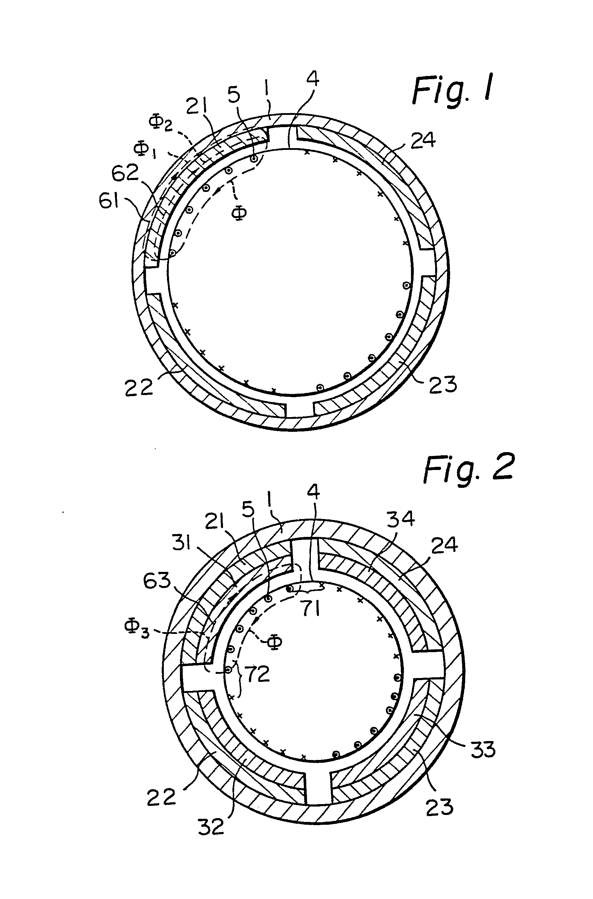

In general, a DC motor with magnetic field poles made of ferrite permanent magnets has a structure illustrated in Fig. 1 in which magnetic field poles consisting of the ferrite permanent magnets 21, 22, 23 and 24 are attached to the inner surface of a cylindrical stator yoke 1 and a rotor 4 rotates inside the magnetic field poles. Magnetic fluxes $\phi_1$ and $\phi_2$ are produced in the magnetic circuits 61 and 62 by the armature current 5 which flows through the armature winding.

There is a problem that when the value of the armature current exceeds a predetermined value, the value of the magnetic flux $\phi$ produced by the armature current becomes too great, and hence the demagnetization phenomenon of the magnetic flux of the permanent magnet 21 occurs so as to reduce the amount of the magnetic flux of the permanent magnet 21 from the original value, even after the armature current falls to zero. Such demagnetization phenomenon incurs an undesirable effect on the characteristic of the DC motor. Although the increase of the thickness of the ferrite permanent magnet 21 may be contemplated in order to avoid the above described demagnetization phenomenon, the increase of the thickness of the ferrite permanent magnet is not desirable from the viewpoint of the design of the size and the cost of a magnetic field pole.

In the structure of Fig. 1, there is another problem in that, because the machining of the ferrite permanent magnet is difficult, it is difficult to make the width of the air gap between the surface of the magnetic field pole and the periphery of the armature precisely uniform, and hence the distribution of the magnetic flux in the air gap tends to become non-uniform. Also, there is a further problem in that when the magnetic field caused by the ferrite permanent magnet is partially demagnetized, the distribution of the airgap magnetic flux between the magnetic field pole and the periphery of the armature becomes non-uniform, and hence there occurs a ripple in the rotational speed of the armature.

In view of the above described problems in the structure of Fig. 1, there has been proposed another structure of a DC motor illustrated in Fig. 2, in which the demagnetization phenomenon in the magnetic field pole due to the armature current is reduced without increasing the thickness of the ferrite permanent magnet. In the magnetic field pole structure of Fig. 2, the pole shoes 31, 32, 33 and 34 made of a magnetic material of high permeability are attached to the inside of the ferrite permanent magnets 21, 22, 23 and 24 which are attached to the inside surface of the cylindrical yoke 1. In the structure of Fig. 2, the greater portion of the armature reaction magnetic flux $\phi$ passes through the magnetic path 63 which includes the pole shoe 31, so that the amount of the armature reaction magnetic flux $\phi$, which passes through the ferrite permanent magnetic flux, decreases. Accordingly, the disadvantage due to the demagnetization phenomena in the case of the structure of Fig. 1 is reduced. However, the pole shoes 31, 32, 33 and 34 are manufactured by the process of extrusion or the machining of soft iron material, and hence the thickness of each pole shoe 31, 32, 33 and 34 in the radial direction is relatively large. Thus, although it is true that such attachment of the high permeability pole shoes is effective for the reduction of the disadvantage due to the demagnetization phenomena, a portion of the magnetic flux $\phi_3$ passing through the pole shoe 31 passes through the commutation region 71 and 72 of the armature winding, and accordingly it causes a disadvantage of deterioration of the commutation characteristic of the armature. Also, there is another disadvantage in that the process of extrusion or the machining of soft iron material in the manufacture of the pole shoes is relatively complicated and hence the cost of the manufacture becomes expensive.

A DC motor according to the first portion of claim 1 is disclosed in the document "Elektrotechnik und Maschinenbau", Vol. 93, No. 2, page 64. This known motor suffers from the problem that either a portion of the magnetic flux passing through the pole shoes forming iron sheet plates passes through the commutation area and affects the commutation, or the volume of each permanent magnet becomes small if the magnet segments are made small enough to avoid the flux passing through the commutation area.

US—A—3,277,324 discloses a permanent magnet dynamo which has a construction similar to that shown in Fig. 2. In this prior art the high permeability pole shoes covering the inner surfaces of the ferrite permanent magnets are split intermediate their leading and trailing tips so as to leave an air gap in the center of the pole shoe sufficient to interrupt the magnetic circuit. However, this prior art, too, suffers from the above mentioned problem with respect to the commutation.

Disclosure of the Invention

It is the main object of the present invention to provide an improved DC motor with magnetic field poles made of ferrite permanent magnets in which the above described problems in a prior art DC motor are solved, the ripple in the rotational speed is eliminated, and good commutation operation is achieved.

This object is achieved by a DC motor as claimed.

One way of carrying out the invention is described in detail below with reference to drawings.

## Brief Description of the Drawings

Fig. 1 and Fig. 2 illustrate two examples of the lateral cross-sections of prior art DC motors with magnetic field poles made of ferrite permanent magnets;

Fig. 3 illustrates the lateral cross-section of a DC motor in accordance with an embodiment of the present invention;

Fig. 4 illustrates the longitudinal cross-section of the DC motor taken along line IV—IV of Fig. 3;

Figs. 5 and 6 are perspective views illustrating the process of the construction of a magnetic field pole for the DC motor of Fig. 3.

## Description of the Preferred Embodiments

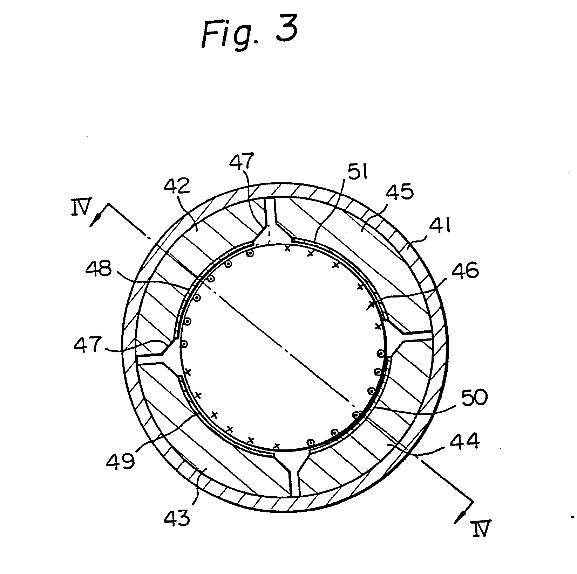

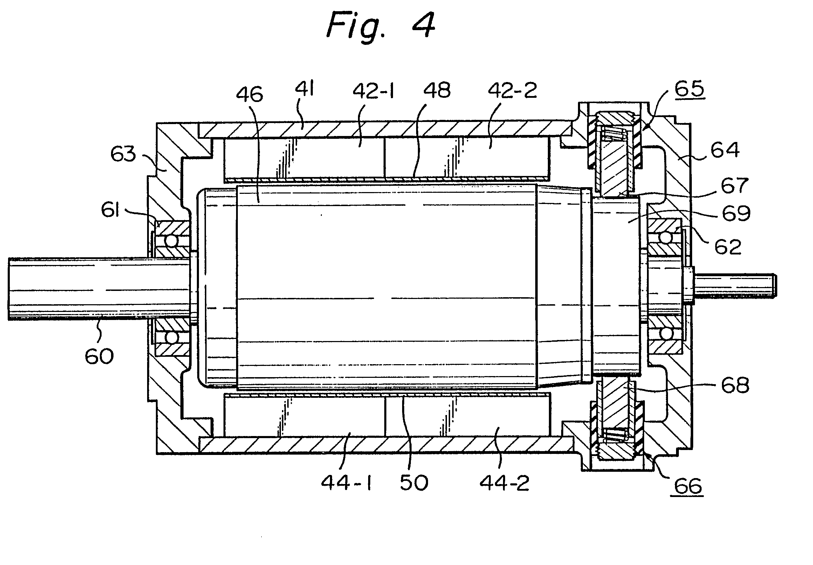

The lateral cross-section of the structure of a DC motor in accordance with an embodiment of the present invention is illustrated in Fig. 3, and the longitudinal cross-section of the structure of the DC motor of Fig. 3 is illustrated in Fig. 4.

Four ferrite permanent magnets 42, 43, 44 and 45 are attached to the inside surface of the cylindrical stator yoke 41. Each of the ferrite permanent magnets 42, 43, 44 and 45 has a span which is a little less than 90°. The ferrite permanent magnets 42, 43, 44 and 45 are arranged in sequence along the inner circumference of the yoke with intervals of the same length. Each of the ferrite permanent magnets 42, 43, 44 and 45 has a pair of slant shoulder portions 47. On the inner surfaces of the ferrite permanent magnets 42, 43, 44 and 45, iron plates 48, 49, 50 and 51 are attached. Each of the ferrite permanent magnets 42, 43, 44 and 45 is divided into two parts along the axis of the motor. As illustrated in Fig. 4, the ferrite permanent magnet 42 is divided into the portion 42-1 and the portion 42-2, and the ferrite permanent magnet 44 is divided into the portion 44-1 and the portion 44-2.

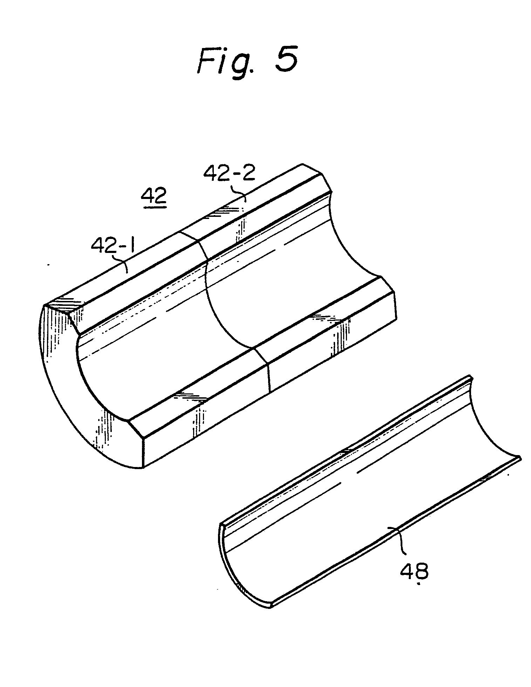

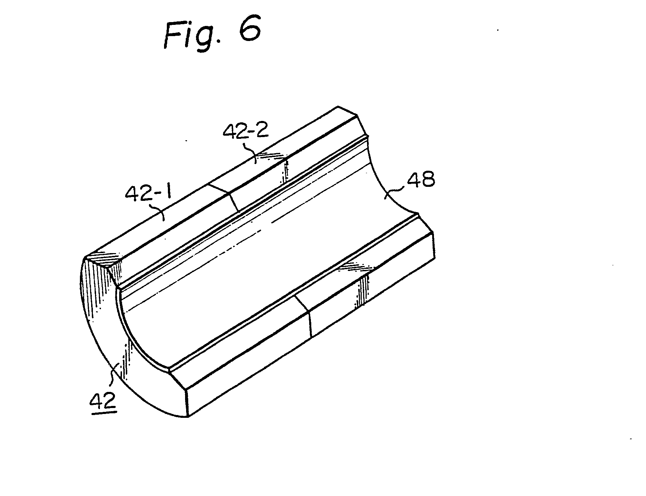

As illustrated in the perspective view of Fig. 5, in the process of the construction of the motor, the shaped portions 42-1 and 42-2 of the ferrite permanent magnet are placed so as to abut each other in alignment with each other. The iron plate 48 is punched from the iron material and is bent so as to fit with the area and the curvature of the joint inner surfaces of the portions 42-1 and 42-2 of the ferrite permanent magnet. Then, as illustrated in the perspective view of Fig. 6, the iron plate 48 is attached to the inner surfaces of the portions 42-1 and 42-2 of the ferrite permanent magnet.

The thus manufactured ferrite permanent magnets 42, 43, 44 and 45 having the iron plates are attached to the inside surface of the cylindrical stator yoke 41 with intervals of the same length.

In the construction of the motor of Fig. 3, the thin iron plates can be punched from the iron sheet material and shaped without difficulty, and hence the production of such thin iron plates can be carried out at low cost. In the structure of Fig. 3, it is easy to ensure the high precision of the width of the air gap between the magnetic field poles and the armature, and the distribution of the magnetic flux at the surface of the magnetic field poles becomes uniform, and hence the ripple in the rotational speed of the armature is reduced.

In accordance with the structure of the motor of Fig. 3, when an unusually large current flows through the armature winding, the magnetic flux caused by the armature reaction by-passes through the iron plate, and hence the ferrite permanent magnet in the magnetic field pole is prevented from becoming demagnetized. Also, even if the ferrite permanent magnet is partially demagnetized due to the extremely large current flowing through the armature winding, the distribution of the magnetic flux at the surface of the magnetic field pole is made uniform because of the existence of the iron plate at the end of the magnetic field pole, and hence the ripple in the rotational speed of the armature is reduced. Furthermore, since the thickness of the iron plate is small, the amount of the portion of the armature reaction magnetic flux which by-passes through the iron plate becomes less than in the case of the prior art structure in which the thick pole shoe is manufactured by the process of extrusion and machining, and hence the amount of the portion of the magnetic flux leaking to the commutation region of the armature is reduced so that the commutation characteristic of the armature winding is prevented from being deteriorated.

As illustrated in Fig. 4, the motor of Fig. 3 further provides the motor shaft 60, the bearings 61 and 62 for the shaft, the end plates 63 and 64, the brush holders 65 and 66, the commutation brushes 67 and 68, and the commutator 69.

## Claim

A DC motor comprising a cylindrical stator yoke (41), a plurality of magnetic field poles (42, 43, 44, 45) made of permanent magnets fixed to the inner surface of said stator yoke (41) and an armature rotatably arranged inside of said stator yoke (41) forming an air gap between said magnetic field poles (42, 43, 44, 45) and said armature, wherein the inner surfaces of said magnetic field poles (42, 43, 44, 45) facing the surface of said armature are covered with iron sheet plates (48, 49, 50, 51) characterised in that each of said magnetic field poles (42, 43, 44, 45) is formed of a ferrite permanent magnet and has a pair of slanted shoulder portions (47) on its inner surface, said iron sheet plates (48, 49, 50, 51) covering the inner surfaces of the magnetic field poles excluding said shoulder portions (47).

## Patentanspruch

Gleichstrommotor mit einem zylindrischen Statorjoch (41), einer Vielzahl von Magnetfeldpolen (42, 43, 44, 45), die aus Permanentmagneten bestehen, welche an der Innenfläche des Statorjochs (41) befestigt sind, und einem Anker, der unter Bildung eines Luftspalts zwischen den Magnetfeldpolen (42, 43, 44, 45) und dem Anker drehbar innerhalb des Statorjochs (41) angeordnet ist, wobei die Innenflächen der Magnetfeldpole (42, 43, 44, 45), die der Oberfläche des Ankers zugewandt sind, mit Eisenblechplatten (48, 49, 50, 51) bedeckt sind, dadurch gekennzeichnet, daß jeder der Magnetfeldpole (42, 43, 44, 45) aus einem Ferritpermanentmagnet gebildet ist und ein Paar abgeschrägter Schulterteile (47) an seiner Innenfläche besitzt, wobei die Eisenblechplatten (48, 49, 50, 51) die Innenflächen der Magnetfeldpole mit Ausnahme der Schulterteile (47) bedecken.

**Revendication**

Moteur à courant continu comprenant une carcasse cylindrique formant le stator (41), plusieurs pôles magnétiques (42, 43, 44 et 45) faits d'aimants permanents fixés à la surface interne de ladite carcasse formant le stator (41), et un induit monté rotatif à l'intérieur de ladite carcasse formant le stator (41) de manière qu'il existe un entrefer entre lesdits pôles magnétiques (42, 43, 44 et 45) et ledit induit, où les surfaces internes desdits pôles magnétiques (42, 43, 44 et 45) tournées vers la surface dudit induit sont revêtues de plaques en tôle de fer (48, 49, 50 et 51), caractérisé en ce que chacun desdits pôles magnétiques (42, 43, 44 et 45) est formé d'un aimant permanent en ferrite et possède deux épaulements en biais (47) à sa surface interne, lesdites plaques en tôle de fer (48, 49, 50 et 51) couvrant les surfaces internes des pôles magnétiques à l'exclusion desdits épaulements (47).

Fig. 1

Fig. 2

Fig. 3

Fig. 4

# Fig. 5

# Fig. 6